# EUROPEAN PATENT APPLICATION

(11) **EP 4 571 357 A1**
(43) Date of publication of application: **18.06.2025**
(21) Application number: 23852367.4
(22) Date of filing: 25.07.2023
(51) Int. Cl.: G01S 7/521, G01S 7/52, G01S 7/524, G01S 15/931, H04R 3/00, H04R 17/00

(54) **ULTRASOUND GENERATOR, VIBRATOR, AND OBJECT DETECTION DEVICE**

(30) Priority: 08.08.2022 JP 2022126038
(71) Applicant: AISIN CORPORATION, Kariya-shi, Aichi 448-8650 (JP)
(72) Inventor: SUGAE, Ippei, Kariya-shi, Aichi 448-8650 (JP); INABA, Hisashi, Kariya-shi, Aichi 448-8650 (JP)
(74) Representative: TBK
(86) International application number: PCT/JP2023/027199
(87) International publication number: WO 2024/034391

(57) **Abstract**

An ultrasound generator according to an embodiment includes a vibrator including a piezoelectric body that, when an alternating-current voltage is applied, vibrates due to a piezoelectric effect and generates ultrasound, two or more electrodes provided at positions different in height on a surface of the piezoelectric body, and a counter electrode provided at a position facing the two or more electrodes, and a control unit that, when receiving ultrasound generation instruction including information about directivity of ultrasound to be generated, performs control to select from among the two or more electrodes and the counter electrode, a combination of a voltage application electrode and ground electrode corresponding to directivity according to the ultrasound generation instruction, the voltage application electrode being an electrode to which an alternating-current voltage is applied, and the ground electrode being an electrode to be set to a ground potential, and apply an alternating-current voltage to the voltage application electrode to generate ultrasound.

## Description

### TECHNICAL FIELD

The present disclosure relates to an ultrasound generator, a vibrator, and an object detection device.

### BACKGROUND ART

Conventionally, there is a technique of applying alternating-current voltage to a piezoelectric body and vibrating the piezoelectric body with a piezoelectric effect to generate ultrasound. Furthermore, assuming that object detection is performed on the basis of a reflected wave of the generated ultrasound, it is meaningful to change directivity of the ultrasound in a height direction (vertical direction).

In order to change the directivity of the ultrasound in the height direction, for example, there is a method using a plurality of vibrators.

### CITATIONS LIST

### PATENT LITERATURE

Patent Literature 1: JP 2012-249950 A
Patent Literature 2: JP 2009-21723 A

### SUMMARY OF INVENTION

### TECHNICAL PROBLEMS

However, there is a problem that a cost increases if a plurality of vibrators are used to change a directivity of ultrasound in a height direction.

Therefore, the present disclosure aims to provide an ultrasound generator, vibrator, and object detection device capable of changing directivity of generated ultrasound in a height direction at low cost.

### SOLUTIONS TO PROBLEMS

An ultrasound generator as an example of the present disclosure includes a vibrator including a piezoelectric body that, when an alternating-current voltage is applied, vibrates due to a piezoelectric effect and generates ultrasound, two or more electrodes provided at positions different in height on a surface of the piezoelectric body, and a counter electrode provided at a position facing the two or more electrodes, and a control unit that, when receiving ultrasound generation instruction including information about directivity of ultrasound to be generated, performs control to, select from among the two or more electrodes and the counter electrode, a combination of a voltage application electrode and ground electrode corresponding to directivity according to the ultrasound generation instruction, the voltage application electrode being an electrode to which an alternating-current voltage is applied, and the ground electrode being an electrode to be set to a ground potential, and apply an alternating-current voltage to the voltage application electrode to generate ultrasound.

With such a configuration, the directivity in the height direction of the ultrasound can be changed with a single vibrator, and thus a low cost is achieved.

Furthermore, the vibrator as an example of the present disclosure includes a piezoelectric body that, when an alternating-current voltage is applied, vibrates due to a piezoelectric effect and generates ultrasound, two or more electrodes provided at positions different in height on a surface of the piezoelectric body, and a counter electrode provided at a position facing the two or more electrodes, with which directivity of generated ultrasound differs depending on a selected combination of a voltage application electrode and ground electrode, the voltage application electrode being an electrode to which an alternating-current voltage is applied, and the ground electrode being an electrode to be set to a ground potential.

With such a configuration, the directivity in the height direction of the ultrasound can be changed with a single vibrator, and thus a low cost is achieved.

Furthermore, the object detection device as an example of the present disclosure includes a transmission unit that transmits ultrasound with the vibrator, a reception unit that receives a reflected wave of the ultrasound with the vibrator, and the control unit. The vibrator includes a piezoelectric body that, when an alternating-current voltage is applied, vibrates due to a piezoelectric effect and generates ultrasound, two or more electrodes provided at positions different in height on a surface of the piezoelectric body, and a counter electrode provided at a position facing the two or more electrodes. When receiving ultrasound generation instruction including information about the directivity of the ultrasound to be generated, the control unit selects, from among the two or more electrodes and the counter electrode, a combination of a voltage application electrode and ground electrode corresponding to directivity according to the ultrasound generation instruction, the voltage application electrode being an electrode to which an alternating-current voltage is applied, and the ground electrode being an electrode to be set to the ground potential, and applies the alternating-current voltage to the voltage application electrode to generate ultrasound.

With such a configuration, the directivity in the height direction of the ultrasound can be changed with a single vibrator, and thus a low cost is achieved.

### BRIEF DESCRIPTION OF DRAWINGS

FIG. 1 is a schematic diagram of an appearance of a vehicle including an object detection system according to an embodiment, as viewed from above.
FIG. 2 is a block diagram schematically showing a schematic hardware configuration of an ECU and an object detection device according to the embodiment.
FIG. 3 is a schematic diagram showing an overview of a vibrator according to the embodiment.
FIG. 4 is an explanatory diagram of directivity of ultrasound generated from the vibrator according to the embodiment.
FIG. 5 is an explanatory diagram of a range of detection with the ultrasound generated from the vibrator according to the embodiment.
FIG. 6 is an explanatory diagram of an overview of a technique utilized by the object detection device according to the embodiment to detect a distance to an object;
FIG. 7 is a block diagram schematically showing a detailed configuration of the object detection device according to the embodiment.
FIG. 8 is a diagram showing directivity correspondence information according to the embodiment.
FIG. 9 is a flowchart showing first processing executed by the object detection system according to the embodiment.
FIG. 10 is a flowchart showing second processing executed by the object detection system according to the embodiment.
FIG. 11 is a flowchart showing third processing executed by the object detection system according to the embodiment.

### DESCRIPTION OF EMBODIMENTS

Hereinafter, an embodiment of the present disclosure will be described with reference to the drawings. The configurations of the embodiment described below and functions and effects brought about by the configurations are merely an example, and the present invention is not limited to the following description.

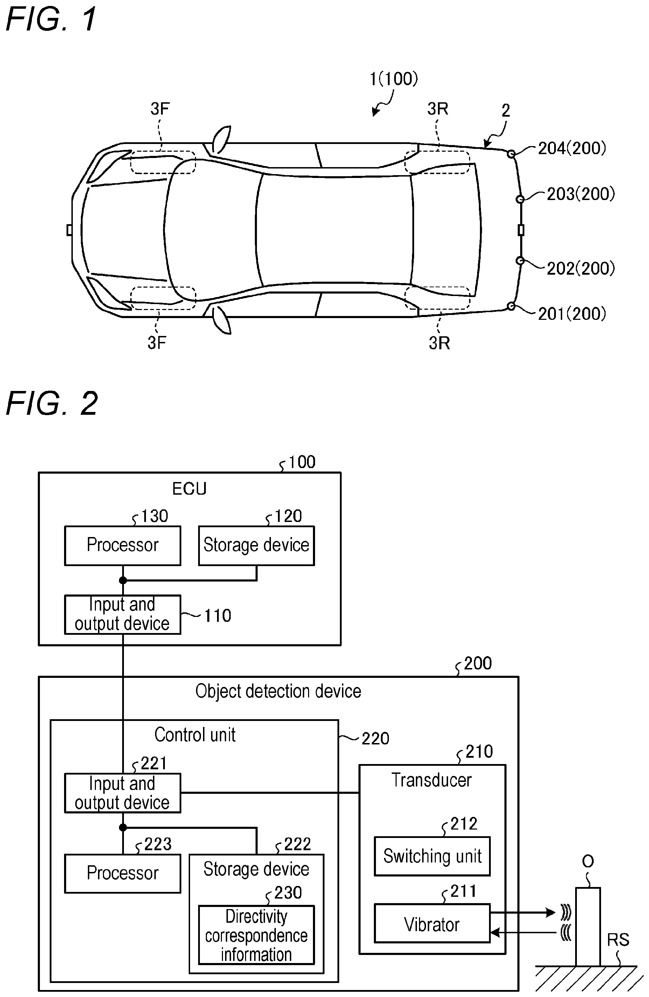

FIG. 1 is a schematic diagram of an appearance of a vehicle including an object detection system according to an embodiment, as viewed from above. The object detection system according to the embodiment is a vehicle-mounted sensor system that transmits and receives ultrasound and detects information about an object (for example, an obstacle O to be described later as shown in FIG. 2) present in the surroundings, by utilizing, for example, a time difference between the transmission and reception.

More specifically, as shown in FIG. 1, the object detection system according to the embodiment includes an electronic control unit (ECU) 100 as an in-vehicle control device, and object detection devices 201 to 204 as vehicle-mounted sonars. The ECU 100 is mounted inside a four-wheeled vehicle 1 including a pair of front wheels 3F and a pair of rear wheels 3R, and the object detection devices 201 to 204 are mounted on an exterior of the vehicle 1.

In the example shown in FIG. 1, as an example, the object detection devices 201 to 204 are mounted at different positions on a rear-end portion (rear bumper) of a vehicle body 2 as the exterior of the vehicle 1. However, mounting positions of the object detection devices 201 to 204 are not limited to the example shown in FIG. 1. For example, the object detection devices 201 to 204 may be mounted at a front-end portion (front bumper) of the vehicle body 2, may be mounted at a side-surface portion of the vehicle body 2, or may be mounted at two or more of the rear-end portion, the front-end portion, and the side-surface portion.

Note that, in the embodiment, hardware configurations and functions of the respective object detection devices 201 to 204 are identical. Therefore, in the following, for simplicity of description, each of the object detection devices 201 to 204 will be collectively referred to as an "object detection device 200" (an example of an ultrasound generator). Furthermore, in the embodiment, the number of the object detection devices 200 is not limited to four as shown in FIG. 1.

FIG. 2 is a block diagram schematically showing a schematic hardware configuration of an ECU 100 and an object detection device 200 according to the embodiment.

As shown in FIG. 2, the ECU 100 has a hardware configuration similar to a hardware configuration of a common computer. More specifically, the ECU 100 includes an input and output device 110, a storage device 120, and a processor 130.

The input and output device 110 is an interface for achieving transmission and reception of information between the ECU 100 and an outside (an object detection device 200 in the example shown in FIG. 1).

The storage device 120 includes a main storage device such as a read only memory (ROM) and a random access memory (RAM), and/or an auxiliary storage device such as a hard disk drive (HDD) and a solid state drive (SSD).

The processor 130 manages various kinds of processing executed in the ECU 100. The processor 130 includes an arithmetic device such as a central processing unit (CPU), for example. The processor 130 implements various functions by reading and executing a computer program stored in the storage device 120.

Meanwhile, as shown in FIG. 2, the object detection device 200 includes a transducer 210 and a control unit 220.

The transducer 210 includes a vibrator 211 (an example of an ultrasonic sensor) including a piezoelectric element and the like, and a switching unit 212, and transmits and receives ultrasound with the vibrator 211.

More specifically, the transducer 210 transmits, as a transmission wave, ultrasound generated in response to vibration of the vibrator 211, and receives, as a reception wave (reflected wave), the vibration of the vibrator 211 caused by the ultrasound transmitted as the transmission wave being reflected by an object present outside and returning. In the example shown in FIG. 2, the obstacle O installed on the road surface RS is exemplified as an object that reflects ultrasound from the transducer 210.

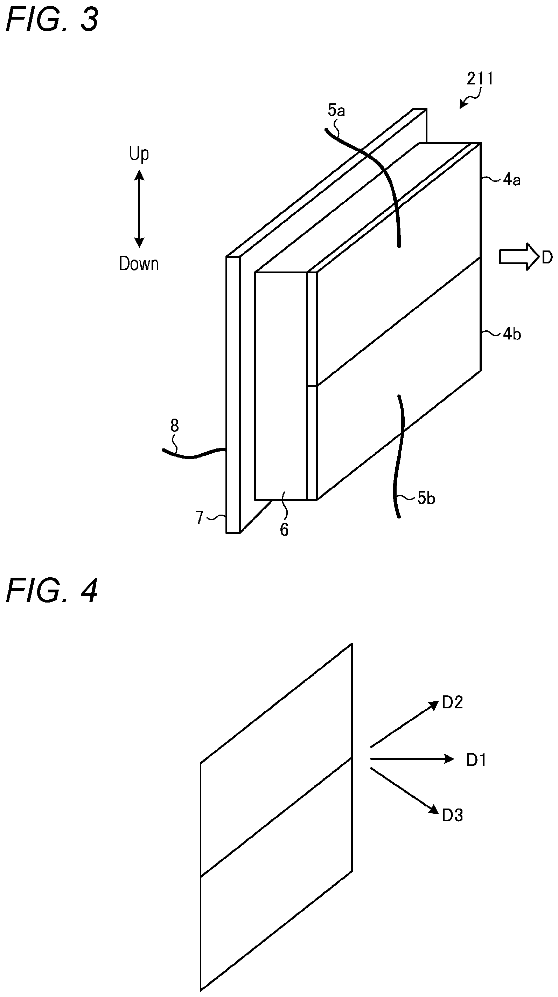

Here, FIG. 3 is a schematic diagram showing an overview of the vibrator 211 according to the embodiment. In the following description, it is assumed that the vibrator 211 is mounted on the vehicle 1. The vibrator 211 includes a front electrode 4, wiring lines 5, a piezoelectric body 6, a rear electrode 7, and a wiring line 8.

The front electrode 4 is an example of two or more electrodes provided at positions having different heights (positions in a vertical direction) on a surface of the piezoelectric body 6. The front electrode 4 includes front electrodes 4a and 4b. The front electrodes 4a and 4b are electrically insulated from each other.

The wiring lines 5 include a wiring line 5a connected to the front electrode 4a and a wiring line 5b connected to the front electrode 4b.

When an alternating-current voltage is applied to the piezoelectric body 6, the piezoelectric body 6 vibrates due to a piezoelectric effect and generates ultrasound.

The rear electrode 7 is a counter electrode provided on the surface of the piezoelectric body 6 at a position facing the front electrodes 4a and 4b.

The wiring line 8 is connected to the rear electrode 7.

Then, a processor 223 selects a voltage application electrode and a ground electrode from among the front electrodes 4a and 4b and the rear electrode 7, and controls directivity of the generated ultrasound by adjusting a frequency, phase, and amplitude of the alternating-current voltage to be applied (details will be described later).

Returning to FIG. 2, the control unit 220 has a hardware configuration similar to a hardware configuration of a normal computer. More specifically, the control unit 220 includes an input and output device 221, a storage device 222, and the processor 223.

The input and output device 221 is an interface for achieving transmission and reception of information between the control unit 220 and the outside (the ECU 100 and the transducer 210 in the example shown in FIG. 1).

The storage device 222 includes a main storage device such as a ROM and a RAM, and/or an auxiliary storage device such as an HDD and an SSD. The storage device 222 stores, for example, directivity correspondence information 230. The directivity correspondence information 230 is an example of correspondence information about a combination of a voltage application electrode, which is an electrode to which the alternating-current voltage is applied, and a ground electrode, which is an electrode to be set to a ground potential, among the front electrodes 4a and 4b and the rear electrode 7, a frequency, phase, and amplitude of the alternating-current voltage to be applied, and the directivity of the ultrasound to be generated. Note that not all of the frequency, phase, and amplitude are essential, and some or all of them may be omitted.

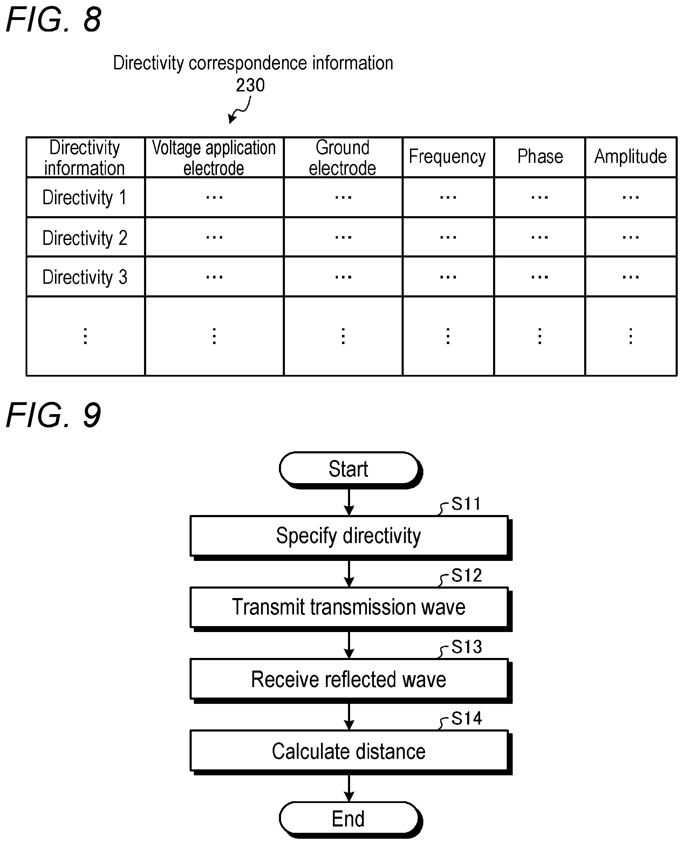

Here, FIG. 8 is a diagram showing the directivity correspondence information 230 according to the embodiment. In the directivity correspondence information 230, a combination of a voltage application electrode and a ground electrode, and a frequency, phase, and amplitude of the alternating-current voltage to be applied are associated with each piece of directivity information that is information regarding an output direction and spread of ultrasound. For example, if combinations of a voltage application electrode and a ground electrode are different, how the voltage is applied to the piezoelectric body 6 is different, and a point of the piezoelectric body 6 that vibrates is different, and thus the directivity of the ultrasound generated from the piezoelectric body 6 is also different. Note that the number of ground electrodes may be plural or one. Furthermore, an electrode that is neither the voltage application electrode nor the ground electrode is insulated. Furthermore, the directivity of the ultrasound generated from the piezoelectric body 6 also varies depending on the frequency, phase, and amplitude of the alternating-current voltage to be applied.

Furthermore, the output direction of the ultrasound generated from the vibrator 211 is approximately a direction denoted by a reference sign D in FIG. 3. Here, FIG. 4 is an explanatory diagram of the directivity of the ultrasound generated from the vibrator according to the embodiment. Depending on the combination of the voltage application electrode and the ground electrode, and the frequency, phase, and amplitude of the alternating-current voltage to be applied, the output direction of the ultrasound generated from the piezoelectric body 6 may change in various directions in the height direction as exemplified by reference signs D1 to D3. Furthermore, how the ultrasound spreads may variously change. Then, for example, the directivity correspondence information 230 as shown in FIG. 8 can be created in advance on the basis of an experiment.

Returning to FIG. 2, the processor 223 manages various processing executed in the control unit 220. The processor 223 includes an arithmetic device such as a CPU, for example. The processor 223 implements various functions by reading and executing a computer program stored in the storage device 222.

For example, when receiving from the ECU 100 ultrasound generation instruction including information about the directivity of the ultrasound to be generated, the processor 223 refers to the directivity correspondence information 230. The processor 223 then selects, from among the front electrodes 4a and 4b and the rear electrode 7, a combination of a voltage application electrode and ground electrode corresponding to directivity according to the ultrasound generation instruction, the voltage application electrode being an electrode to which an alternating-current voltage is applied, and the ground electrode being an electrode to be set to the ground potential. Then, the processor 223 determines the frequency, phase, and amplitude, and applies the alternating-current voltage to the voltage application electrode to generate ultrasound.

Furthermore, the processor 223 calculates a distance to the object that has reflected the ultrasound, on the basis of a timing at which the transmission unit transmits ultrasound and a timing at which the reception unit receives a reflected wave of the ultrasound. Then, in a case where the distance has changed with a lapse of time, the processor 223 changes the directivity in the height direction of the ultrasound transmitted by the transmission unit, on the basis of the directivity change information in which a degree of change in the height direction of the directivity is set according to the distance (details will be described later).

Furthermore, the processor 223 acquires information about a change in intensity of the reflected wave, while changing the directivity in the height direction of the ultrasound transmitted by the transmission unit, and calculates a height of the object that has reflected the ultrasound, on the basis of the change information (details will be described later).

Note that, when the combination of the voltage application electrode and the ground electrode is determined, among the wiring lines 5a, 5b, and 8, the switching unit 212 performs switching to connect, to a power supply, a wiring line corresponding to the voltage application electrode, performs switching to connect, to the ground, a wiring line corresponding to the ground electrode, and further performs switching to insulate another wiring line, according to an instruction of the processor 223.

The object detection device 200 according to the embodiment detects a distance to the object with a technique called a Time Of Flight (ToF) method. The ToF method is a technique of calculating a distance to an object in consideration of a difference between a timing at which a transmission wave is transmitted (more specifically, transmission starts) and a timing at which a reception wave is received (more specifically, reception starts).

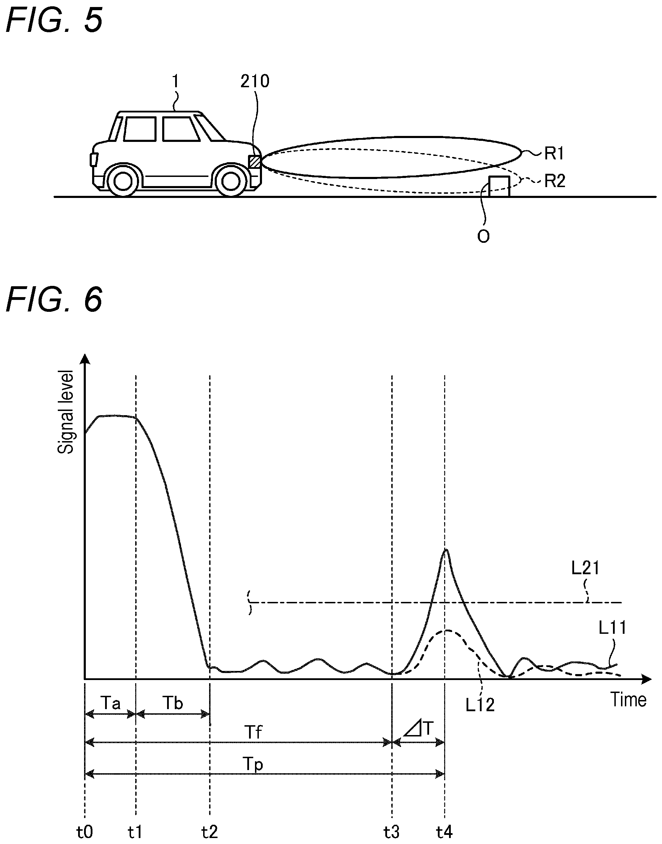

Here, FIG. 5 is an explanatory diagram of a range of detection with the ultrasound generated from the vibrator 211 according to the embodiment. In a case where the transducer 210 is mounted in front of the vehicle 1, the range of detection with the ultrasound generated from the vibrator 211 can be switched in the height direction as shown in regions R1 and R2.

Furthermore, FIG. 6 is an explanatory diagram of an overview of a technique utilized by the object detection device 200 according to the embodiment to detect a distance to the object. More specifically, FIG. 6 is a diagram exemplarily and schematically showing, as a graph, a temporal change in a signal level (for example, amplitude) of ultrasound transmitted and received by the object detection device 200 according to the embodiment. In the graph shown in FIG. 6, the horizontal axis corresponds to time, and the vertical axis corresponds to the signal level of the signal transmitted and received by the object detection device 200 via the transducer 210 (vibrator 211).

In the graph shown in FIG. 6, a solid line L11 represents an example of an envelope representing a temporal change in the signal level of the signal transmitted and received by the object detection device 200, that is, a magnitude of vibration of the vibrator 211. It can be understood from the solid line L11 that the vibrator 211 is driven to vibrate from a timing t0 by a time Ta, by which transmission of the transmission wave is completed at a timing t1, and then the vibration of the vibrator 211 by inertia continues while attenuating during a time Tb until a timing t2. Therefore, in the graph shown in FIG. 6, the time Tb corresponds to a so-called reverberation time.

The solid line L11 reaches a peak at which the magnitude of the vibration of the vibrator 211 exceeds a predetermined threshold Th1 represented by a dash-dotted line L21 at a timing t4 after a lapse of a time Tp from the timing t0 at which the transmission of the transmission wave is started. The threshold Th1 is a value set in advance to identify whether the vibration of the vibrator 211 is caused by reception of a reception wave as a transmission wave reflected by an object to be detected (for example, the obstacle O shown in FIG. 2), and returned, or is caused by reception of a reception wave as a transmission wave reflected by an object not to be detected (for example, the road surface RS shown in FIG. 2), and returned.

Note that FIG. 6 shows an example in which the threshold Th1 is set as a constant value that does not change with a lapse of time. However, in the embodiment, the threshold Th1 may be set as a value that changes with the lapse of time.

Here, the vibration having the peak exceeding the threshold Th1 can be regarded as being caused by reception of the reception wave as the transmission wave reflected by the object to be detected, and returned. Meanwhile, the vibration having the peak equal to or less than the threshold Th1 can be regarded as being caused by reception of the reception wave as the transmission wave reflected by the object not to be detected, and returned.

Therefore, it can be understood from the solid line L11 that the vibration of the vibrator 211 at the timing t4 is caused by the reception of the reception wave as the transmission wave reflected by the object to be detected, and returned.

Note that, in the solid line L11, the vibration of the vibrator 211 attenuates after the timing t4. Therefore, the timing t4 corresponds to a timing at which reception of the reception wave as the transmission wave reflected by the object to be detected, and returned is completed, in other words, a timing at which the transmission wave transmitted last at the timing t1 returns as a reception wave.

Furthermore, in the solid line L11, a timing t3 as a start point of the peak at a timing t4 corresponds to a timing at which reception of the reception wave as the transmission wave reflected by the object to be detected, and returned is started, in other words, a timing at which a transmission wave first transmitted at the timing t0 returns as a reception wave. Therefore, with the solid line L11, a time ΔT between the timing t3 and the timing t4 is equal to the time Ta as a transmission time of the transmission wave.

Based on the above, in order to obtain, by utilizing the ToF method, a distance to the object to be detected, it is necessary to obtain a time Tf between the timing t0 at which the transmission wave starts to be transmitted and the timing t3 at which the reception wave starts to be received. The time Tf can be obtained by subtracting the time ΔT equal to the time Ta as the transmission time of the transmission wave, from the time Tp as a difference between the timing t0 and the timing t4 at which a signal level of the reception wave reaches a peak, exceeding the threshold Th1.

Furthermore, there is a case where it is desired to change the directivity of the ultrasound generated from the vibrator 211 in the height direction when, for example, it is examined whether the object that has reflected the ultrasound is an object to be detected (for example, the obstacle O shown in FIG. 2) or an object not to be detected (for example, the road surface RS shown in FIG. 2).

However, there is a problem that a cost increases if a plurality of ultrasonic sensors are used to control the directivity of the ultrasound. Therefore, in the embodiment, low cost is achieved by controlling the directivity of the ultrasound with a single ultrasonic sensor (vibrator 211).

Note that, in FIG. 6, the solid line L11 corresponds to a case where a range of the detecting the transducer 210 is the region R2 in FIG. 5. Furthermore, a broken line L12 corresponds to a case where the range of the detecting the transducer 210 is the region R1 in FIG. 5. As described above, because the signal level of the reflected wave from the object is changed by changing the directivity in the height direction of the ultrasound to be generated, it is possible to increase accuracy of detecting the object or calculate the height of the object.

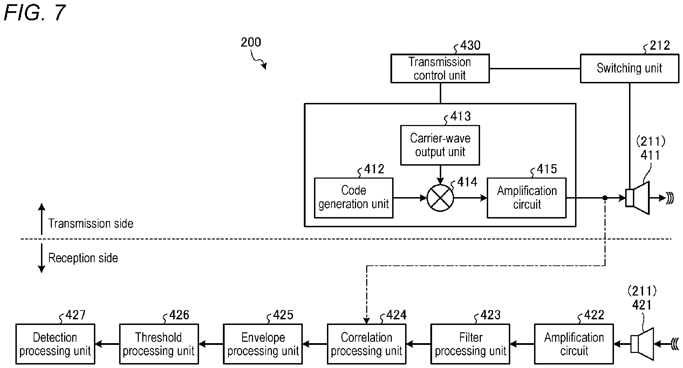

FIG. 7 is a block diagram schematically showing a detailed configuration of the object detection device 200 according to the embodiment. Note that FIG. 7 shows a configuration of a transmission side (transmission unit) and a configuration of a reception side (reception unit) separately, but such a shown aspect is merely for convenience of description. Therefore, in the embodiment, as described above, both the transmission of the transmission wave and the reception of the reception wave are achieved by a single transducer 210. However, techniques according to the embodiment are also applicable to a configuration in which the configuration of the transmission side and the configuration of the reception side are separated.

Furthermore, in the embodiment, at least a part of the configuration shown in FIG. 7 is implemented as a result of cooperation between hardware and software, more specifically, as a result of the processor 223 of the object detection device 200 reading and executing the computer program from the storage device 222. However, in the embodiment, at least a part of the configuration shown in FIG. 7 may be implemented by dedicated hardware (circuitry).

First, the configuration of the transmission side of the object detection device 200 will be briefly described.

As shown in FIG. 7, the object detection device 200 includes, as the configuration of the transmission side, a transmission control unit 430, a transmitter 411, a code generation unit 412, a carrier-wave output unit 413, a multiplier 414, and amplification circuit 415.

The transmitter 411 includes the vibrator 211 described above, and the vibrator 211 transmits a transmission wave corresponding to a (amplified) transmission signal output from the amplification circuit 415.

Here, in the embodiment, the transmitter 411 encodes the transmission wave so as to include identification information about a predetermined code length on the basis of a configuration described below, and then transmits the transmission wave.

The code generation unit 412 generates a pulse signal corresponding to a code of a bit string including, for example, consecutive 0 or 1 bits. Note that a length of the bit string corresponds to a code length of the identification information assigned to the transmission signal. For example, the code length is set to a length with which the four object detection devices 200 shown in FIG. 1 can identify, from each other, the transmission waves transmitted from the respective object detection devices 200.

The carrier-wave output unit 413 outputs a carrier wave as a signal to which identification information is to be assigned. For example, the carrier-wave output unit 413 outputs a sine wave of a predetermined frequency as a carrier wave.

The multiplier 414 modulates the carrier wave so as to assign the identification information by multiplying output from the code generation unit 412 and the output from the carrier-wave output unit 413. Then, to the amplification circuit 415, the multiplier 414 outputs the modulated carrier wave to which the identification information is assigned, as a transmission signal that is a source of the transmission wave. Note that, in the embodiment, as a modulation scheme, for example, one of a plurality of generally well-known modulation schemes, such as an amplitude modulation scheme and a phase modulation scheme, or a combination of two or more of the modulation schemes may be used.

The amplification circuit 415 amplifies the transmission signal output from the multiplier 414, and outputs the amplified transmission signal to the transmitter 411.

Furthermore, referring also to FIG. 3, when receiving from the ECU 100 ultrasound generation instruction including information about the directivity of the ultrasound to be generated, the transmission control unit 430 (processor 223) refers to the directivity correspondence information 230, selects, from among the front electrodes 4a and 4b and the rear electrode 7, a combination of a voltage application electrode and ground electrode corresponding to directivity in the ultrasound generation instruction, and determines the frequency, phase, and amplitude. Then, according to the combination of the voltage application electrode and the ground electrode in the transmitter 411 (vibrator 211), the transmission control unit 430 controls the switching unit 212, so as to, among the wiring lines 5a, 5b, and 8, performs switching to connect, to the power supply, a wiring line corresponding to the voltage application electrode, performs switching to connect, to the ground, a wiring line corresponding to the ground electrode, and further performs switching to insulate another wiring line.

With such a configuration, in the embodiment, the transmission control unit 430, the switching unit 212, the code generation unit 412, the carrier-wave output unit 413, the multiplier 414, the amplification circuit 415, and the transmitter 411 can be used to transmit the transmission wave (ultrasound) to which predetermined identification information is assigned and control directivity of the transmission wave.

Next, the configuration of the reception side of the object detection device 200 will be briefly described.

As shown in FIG. 7, the object detection device 200 includes a receiver 421, an amplification circuit 422, a filter processing unit 423, a correlation processing unit 424, an envelope processing unit 425, a threshold processing unit 426, and a detection processing unit 427 as the configuration of the reception side

The receiver 421 includes the vibrator 211 described above, and receives the transmission wave reflected by the object as a reception wave, by the vibrator 211.

The amplification circuit 422 amplifies a reception signal as a signal corresponding to the reception wave received by the receiver 421.

The filter processing unit 423 performs filtering processing on the reception signal amplified by the amplification circuit 422 to reduce noise. Note that, in the embodiment, the filter processing unit 423 may acquire information regarding frequency of the transmission signal, and may further perform frequency correction (for example, correction using a band pass filter that passes a specific frequency, correction for frequency transition by a Doppler shift, and the like) on the reception signal so as to match the frequency of the transmission signal.

The correlation processing unit 424 acquires a correlation value corresponding to similarity of identification information between the transmission wave and the reception wave on the basis of, for example, a transmission signal acquired from the configuration on the transmission side and a reception signal subjected to filtering processing by the filter processing unit 423. The correlation value can be acquired on the basis of a generally well-known correlation function or the like.

The envelope processing unit 425 obtains an envelope of a waveform of a signal corresponding to the correlation value acquired by the correlation processing unit 424.

The threshold processing unit 426 compares a value of the envelope obtained by the envelope processing unit 425 with a predetermined threshold.

On the basis of a result of the comparison by the threshold processing unit 426, the detection processing unit 427 determines a timing (timing t4 shown in FIG. 6) at which the signal level of the reception wave reaches a peak exceeding a threshold and detects the distance to the object with the ToF method.

On the basis of the above configuration, the object detection system according to the embodiment executes processing as shown in FIG. 9 below. A series of processing shown in FIG. 9 is repeatedly executed at a predetermined control cycle, for example. FIG. 9 is a flowchart showing first processing executed by the object detection system according to the embodiment.

As shown in FIG. 9, first, in S11, when receiving from the ECU 100 ultrasound generation instruction including information about directivity of ultrasound to be generated, the transmission control unit 430 (FIG. 7) refers to the directivity correspondence information 230. The transmission control unit 430 then selects, from among the front electrodes 4a and 4b and the rear electrode 7, a combination of a voltage application electrode and ground electrode corresponding to directivity in the ultrasound generation instruction. Then, according to the combination, the transmission control unit 430 controls the switching unit 212 so as to, among the wiring lines 5a, 5b, and 8, performs switching to connect, to the power supply, a wiring line corresponding to the voltage application electrode, performs switching to connect, to the ground, a wiring line corresponding to the ground electrode, and further performs switching to insulate another wiring line.

Next, in S12, the transmitter 411 of the object detection device 200 transmits the transmission wave to which the predetermined identification information is assigned. At that time, the frequency, phase, and amplitude corresponding to the ultrasound generation instruction in the directivity correspondence information 230 are used.

Next, in S13, the receiver 421 of the object detection device 200 receives the reflected wave (reception wave) corresponding to the transmission wave transmitted in S12. Then, the correlation processing unit 424 of the object detection device 200 acquires a correlation value corresponding to the similarity of the identification information between the transmission wave and the reception wave under control of the ECU 100, for example.

Next, in S14, after the processing by the envelope processing unit 425 and the processing by the threshold processing unit 426, the detection processing unit 427 detects the distance to the object with the ToF method.

As described above, according to the object detection device 200 of the present embodiment, by using the vibrator 211 having a configuration as shown in FIG. 3, a combination of a voltage application electrode and ground electrode is selected from among the front electrodes 4a and 4b and the rear electrode 7, and a frequency, phase, and amplitude are adjusted, by which directivity in the height direction of the ultrasound can be changed by a single vibrator 211, and thus a low cost is achieved. That is, although the vibrator needs to have a predetermined size or more in order to vibrate, in a conventional technique, it is necessary to use a plurality of vibrators having a predetermined size or more in a case where a plurality of vibrators are used to control directivity in a height direction of ultrasound, and a cost increases. Meanwhile, according to the technology of the present embodiment, directivity of ultrasound can be controlled by a single vibrator 211, and thus a low cost is achieved.

Furthermore, by changing the directivity in the height direction of the generated ultrasound, it is possible to detect a low-height object with high accuracy, and, when multipath (a plurality of propagation paths) occurs, to determine a direction of the ultrasound arriving and reduce effects with high accuracy.

Furthermore, specifically, the directivity in the height direction of the ultrasound can be changed with reference to the directivity correspondence information 230 (FIG. 8).

Furthermore, because the directivity of the ultrasound in the height direction can be controlled, for example, in a case where it is desired to determine whether the reflected wave is a reflected wave from a road surface or a reflected wave from the obstacle, it is possible to acquire useful information by controlling the directivity of the ultrasound. If the reflected wave can be determined, time for filter processing or the like on unnecessary information (reflected wave from the road surface) can be reduced even in subsequent processing.

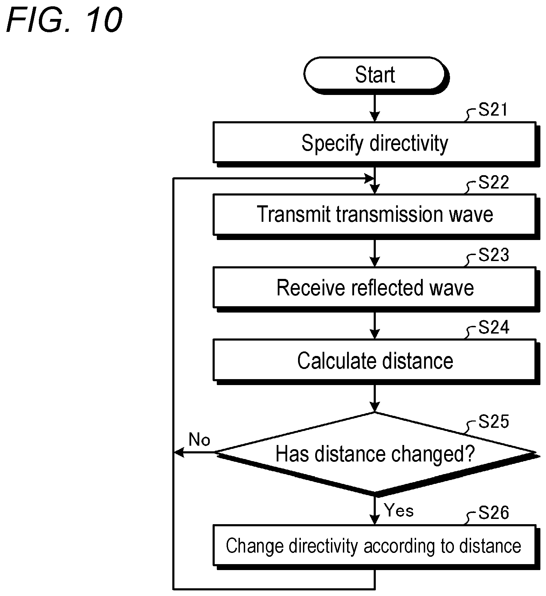

Next, FIG. 10 is a flowchart showing second processing executed by the object detection system according to the embodiment. Steps S21 to S24 are similar to Steps S11 to S14 in FIG. 9.

After Step S24, in Step S25, the processor 223 determines whether or not the distance has changed. If Yes, the processing proceeds to Step S26, and if No, the processing returns to Step S22.

In Step S26, the processor 223 changes the directivity in the height direction of the ultrasound transmitted by the transmission unit, on the basis of the directivity change information in which a degree of change in the height direction of the directivity is set according to the distance.

In this way, for example, in a case where a low-height object on the ground is detected and the distance to the object gradually decreases, intensity of the reflected wave from the object can be maintained and the accuracy of the object detection can be maintained by gradually changing the directivity of the ultrasound downward.

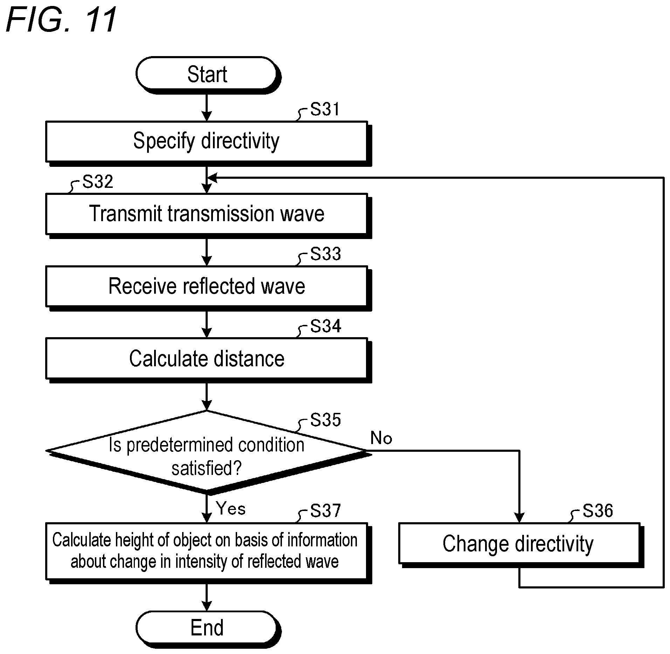

Next, FIG. 11 is a flowchart showing third processing executed by the object detection system according to the embodiment. This series of processing is processing in a case where the height of the object that has reflected the ultrasound is calculated by acquiring information about a change in the intensity of the reflected wave while changing the directivity in the height direction of the ultrasound. Steps S31 to S34 are similar to Steps S11 to S14 in FIG. 9.

After Step S34, in Step S35, the processor 223 determines whether or not the predetermined condition is satisfied. If Yes, the processing proceeds to Step S37, and if No, the processing returns to Step S36. This predetermined condition is a condition for determining whether or not the information about the change in intensity of the reflected wave has been sufficiently acquired. The condition may be that, for example, a reflected wave having a high intensity is acquired a first predetermined number of times or more, and/or a reflected wave having a low intensity is acquired a second predetermined number of times or more. However, the predetermined condition is not limited thereto.

In Step S36, the processor 223 changes the directivity in the height direction on the basis of a predetermined algorithm. Thereafter, the processing returns to Step S32.

In Step S37, the processor 223 calculates the height of the object that has reflected the ultrasound, on the basis of the information about the change in the intensity of the reflected wave.

In this way, for example, in a case where the height is unknown when the object is detected, the height of the object can be calculated by recognizing the change in the intensity of the reflected wave while changing the directivity in the height direction of the ultrasound to be generated.

The embodiment of the present disclosure has been described above, but the above-described embodiment is merely an example, and is not intended to limit the scope of the invention. The embodiment described above may be implemented in a variety of forms, and various omissions, substitutions, and changes may be made without departing from the gist of the invention. The above-described embodiment is included in the scope and gist of the invention, and is included in the invention described in the claims and equivalent scope thereof.

For example, in the above-described embodiment, an entire of and individual electrodes of the front electrode 4 are rectangular and divided into two, but the present invention is not limited thereto. The entire of and individual electrodes of the front electrode 4 may have a shape other than a rectangle (triangle, circle, or the like), and the number of the divisions may be three or more.

Furthermore, the rear electrode 7 may be divided into two or more electrodes.

Furthermore, the directivity correspondence information 230 (correspondence information) may be stored in a storage device outside the object detection device 200.

Furthermore, ultrasound with two or more directivities may be simultaneously generated from the vibrator 211. In that case, the control unit 220 performs control to generate ultrasound with two or more directivities in which at least either frequency or phase is different, and in a case where ultrasound is detected via the transducer 210 immediately thereafter, the control unit 220 determines which ultrasound with two or more directivities the ultrasound is reflected wave is of, on the basis of either the frequency or phase of the detected ultrasound, whichever is different. As described above, by simultaneously transmitting the ultrasound with two or more directivities and determining an original ultrasound at a time of reception, for example, it is possible to reduce chances of an abrupt decrease in signal intensity due to multipath occurring with respect to an obstacle having a plurality of reflection points.

### [Summary of present embodiment]

The present embodiment includes at least the following configurations.

An ultrasound generator includes a vibrator 211 including a piezoelectric body 6 that, when an alternating-current voltage is applied, vibrates due to a piezoelectric effect and generates ultrasound, two or more electrodes (front electrodes 4a and 4b) provided at positions different in height on a surface of the piezoelectric body 6, and a counter electrode (rear electrode 7) provided at a position facing the two or more electrodes, and a control unit 220 that, when receiving ultrasound generation instruction including information about directivity of ultrasound to be generated, performs control to select from among the two or more electrodes and the counter electrode, a combination of a voltage application electrode and ground electrode corresponding to directivity according to the ultrasound generation instruction, the voltage application electrode being an electrode to which an alternating-current voltage is applied, and the ground electrode being an electrode to be set to a ground potential, and apply an alternating-current voltage to the voltage application electrode to generate ultrasound.

With such a configuration, the directivity in the height direction of the ultrasound can be changed by a single vibrator 211, and thus a low cost is achieved.

Furthermore, the ultrasound generator described above further includes a storage unit (storage device 222) that stores correspondence information (directivity correspondence information 230) about a combination of the voltage application electrode and the ground electrode among the two or more electrodes and the counter electrode, and directivity of ultrasound to be generated. The control unit 220 performs control to generate ultrasound with reference to the correspondence information. This configuration is preferable.

With such a configuration, the directivity in the height direction of the ultrasound can be changed with reference to the above-described correspondence information.

Furthermore, the vibrator 211 as an example of the present disclosure includes a piezoelectric body 6 that, when an alternating-current voltage is applied, vibrates due to a piezoelectric effect and generates ultrasound, two or more electrodes provided at positions different in height on a surface of the piezoelectric body 6, and a counter electrode provided at a position facing the two or more electrodes, with which directivity of generated ultrasound differs depending on a selected combination of a voltage application electrode and ground electrode, the voltage application electrode being an electrode to which an alternating-current voltage is applied, and the ground electrode being an electrode to be set to a ground potential.

With such a configuration, the directivity in the height direction of the ultrasound can be changed by a single vibrator 211, and thus a low cost is achieved.

Furthermore, the object detection device 200 as an example of the present disclosure includes a transmission unit that transmits ultrasound with the vibrator 211, a reception unit that receives a reflected wave of the ultrasound with the vibrator 211, and the control unit 220. The vibrator 211 includes a piezoelectric body 6 that, when an alternating-current voltage is applied, vibrates due to a piezoelectric effect and generates ultrasound, two or more electrodes provided at positions different in height on a surface of the piezoelectric body 6, and a counter electrode provided at a position facing the two or more electrodes. When receiving ultrasound generation instruction including information about the directivity of the ultrasound to be generated, the control unit 220 selects, from among the two or more electrodes and the counter electrode, a combination of a voltage application electrode and ground electrode corresponding to directivity according to the ultrasound generation instruction, the voltage application electrode being an electrode to which an alternating-current voltage is applied, and the ground electrode being an electrode to be set to the ground potential, and applies the alternating-current voltage to the voltage application electrode to generate ultrasound.

With such a configuration, the directivity in the height direction of the ultrasound can be changed by a single vibrator 211, and thus a low cost is achieved.

Furthermore, the object detection device 200 described above further includes a storage unit (storage device 222) that stores correspondence information about a combination of the voltage application electrode and the ground electrode among the two or more electrodes and the counter electrode, and directivity of ultrasound to be generated. The control unit 220 performs control to generate ultrasound with reference to the correspondence information. This configuration is preferable.

With such a configuration, the directivity in the height direction of the ultrasound can be changed with reference to the above-described correspondence information.

Furthermore, in the object detection device 200 described above, the control unit 220 calculates a distance to an object that has reflected ultrasound, on the basis of a timing at which the transmission unit transmits ultrasound and a timing at which the reception unit receives a reflected wave of the ultrasound, and in a case where the distance has changed with a lapse of time, changes directivity in a height direction of ultrasound transmitted by the transmission unit, on the basis of directivity change information in which a degree of change in a height direction of directivity is set according to the distance. This configuration is preferable.

With such a configuration, in a case where the distance has changed with a lapse of time, the directivity of the ultrasound in the height direction is changed according to the distance, by which for example, intensity of a reflected wave from a target can be maintained and accuracy of the object detection can be maintained.

Furthermore, in the object detection device 200 described above, the control unit 220 acquires information about a change in intensity of the reflected wave, while changing the directivity in the height direction of the ultrasound transmitted by the transmission unit, and calculates a height of the object that has reflected the ultrasound, on the basis of the change information. This configuration is preferable.

With such a configuration, the height of the object that has reflected the ultrasound can be calculated by recognizing the change in the intensity of the reflected wave while changing the directivity in the height direction of the ultrasound to be generated.

Note that effects of the dependent claims and the embodiments are additional effects different from effects of the independent claims.

### REFERENCE SIGNS LIST

1: Vehicle, 4: Front electrode, 5: Wiring line, 6: Piezoelectric body, 7: Rear electrode, 8: Wiring line, 100: ECU, 200: Object detection device, 210: Transducer, 211: Vibrator, 212: Switching unit, 220: Control unit, 221: Input and output device, 222: Storage device, 223: Processor, and 230: Directivity correspondence information

## Claims

1. An ultrasound generator comprising:
a vibrator including a piezoelectric body that, when an alternating-current voltage is applied, vibrates due to a piezoelectric effect and generates ultrasound, two or more electrodes provided at positions different in height on a surface of the piezoelectric body, and a counter electrode provided at a position facing the two or more electrodes; and
a control unit that, when receiving ultrasound generation instruction including information about directivity of ultrasound to be generated, performs control to select from among the two or more electrodes and the counter electrode, a combination of a voltage application electrode and ground electrode corresponding to directivity according to the ultrasound generation instruction, the voltage application electrode being an electrode to which an alternating-current voltage is applied, and the ground electrode being an electrode to be set to a ground potential, and apply an alternating-current voltage to the voltage application electrode to generate ultrasound.

2. The ultrasound generator according to claim 1, further comprising a storage unit that stores correspondence information about a combination of the voltage application electrode and the ground electrode among the two or more electrodes and the counter electrode, and directivity of ultrasound to be generated, wherein
the control unit performs controls to generate the ultrasound with reference to the correspondence information.

3. A vibrator comprising:
a piezoelectric body that, when an alternating-current voltage is applied, vibrates due to a piezoelectric effect and generates ultrasound; and
two or more electrodes provided at positions different in height on a surface of the piezoelectric body, and a counter electrode provided at a position facing the two or more electrodes, with which directivity of generated ultrasound differs depending on a selected combination of a voltage application electrode and ground electrode, the voltage application electrode being an electrode to which an alternating-current voltage is applied, and the ground electrode being an electrode to be set to a ground potential.

4. An object detection device comprising:
a transmission unit that transmits ultrasound with a vibrator;
a reception unit that receives a reflected wave of the ultrasound with the vibrator; and
a control unit, wherein
the vibrator includes a piezoelectric body that, when an alternating-current voltage is applied, vibrates due to a piezoelectric effect and generates ultrasound, two or more electrodes provided at positions different in height on a surface of the piezoelectric body, and a counter electrode provided at a position facing the two or more electrodes, and
when receiving ultrasound generation instruction including information about directivity of ultrasound to be generated, the control unit selects, from among the two or more electrodes and the counter electrode, a combination of a voltage application electrode and ground electrode corresponding to directivity according to the ultrasound generation instruction, the voltage application electrode being an electrode to which an alternating-current voltage is applied, and the ground electrode being an electrode to be set to a ground potential, and apply an alternating-current voltage to the voltage application electrode to generate ultrasound.

5. The object detection device according to claim 4, further comprising a storage unit that stores correspondence information about a combination of the voltage application electrode and the ground electrode among the two or more electrodes and the counter electrode, and directivity of ultrasound to be generated, wherein
the control unit performs control to generate the ultrasound with reference to the correspondence information.

6. The object detection device according to claim 4, wherein
the control unit
calculates a distance to an object that has reflected ultrasound, on the basis of a timing at which the transmission unit transmits ultrasound and a timing at which the reception unit receives a reflected wave of the ultrasound, and
in a case where the distance has changed with a lapse of time, changes directivity in a height direction of ultrasound transmitted by the transmission unit, on the basis of directivity change information in which a degree of change in a height direction of directivity is set according to the distance.

7. The object detection device according to claim 4, wherein
the control unit
acquires information about a change in intensity of the reflected wave, while changing directivity in a height direction of an ultrasound transmitted by the transmission unit, and
calculates a height of an object that has reflected the ultrasound, on the basis of the change information.
